(19)

Europäisches Patentamt

European Patent Office

Office européen des brevets

(11) **EP 2 587 698 A1**

(12) **EUROPEAN PATENT APPLICATION**

(43) Date of publication:
01.05.2013 Bulletin 2013/18

(51) Int Cl.:
*H04J 3/16* (2006.01)          *H04M 1/73* (2006.01)

(21) Application number: **11008674.1**

(22) Date of filing: **28.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Lantiq Deutschland GmbH**
**85579 Neubiberg (DE)**

(72) Inventor: **Bjarnason, Elias**
**85630 Grasbrunn (DE)**

(74) Representative: **Fechner, Benjamin**
**Wendelsteinstrasse 29A**
**82031 Grünwald b. München (DE)**

(54) **Sleep mode for frame-based data transmission**

(57)     Communication devices and apparatuses are provided with a sleep mode, wherein a wakeup period (41, 43) comprises only a part of a frame, and synchronization information (410, 411, 412) is received during this part of the frame.

Fig. 4

EP 2 587 698 A1

## Description

The present application relates to methods and apparatuses for frame-based data transmission, in particular for frame-based transmission of speech data. Such a frame-based transmission of speech data is for example used in cordless telephones. In Europe and the USA, such telephones operate frequently according to a DECT standard (digital enhanced cordless telecommunications). In other countries, other standards may be used. However, the present invention may also be applied to other types of frame-based data transmission, in particular wireless frame-based data transmission.

Suitable DECT standards include for example ETSI 3000-1751-1,...,8. Other systems where data, in particular speech data, is transmitted in data frames comprise mobile phones which communicate according to a GSM standard or UMTS standard with a base station.

Such cordless telephones typically comprise a base station, also referred to as fixed part (FP), and a portable part (PP). The base station during a telephone call typically receives speech signals for example through the public telephone network or, in case of so-called IP telephony, as packet-based speech data from a network like the internet, codes or transcodes the speech data if necessary and sends the speech data as data frames in wireless form to the portable part. In the portable part, the speech data are decoded and output for example via a loudspeaker.

In the reverse communication direction the portable part captures speech for example via a built-in microphone, encodes the speech and sends it to the base station in a frame-based manner. The base station decodes the speech data and converts it in suitable speech signals for a network, for example to analogue speech signal for the public telephone network or transcodes the speech data if necessary and converts it for example for use in IP telephony in IP packets.

In the last years possible health hazards due to so-called "electrosmog" have been discussed in the public. Therefore, it is generally desirable to reduce the power output by the base station and/or the portable part of such a system as much as possible. Keeping the output power and power consumption in general at a low level is also desirable with respect to battery lifetime in particular of the portable part.

In particular, such a reduction of power is desirable during times when no speech data is to be transmitted, for example when no telephone call is active. However, even during such times it is generally necessary to exchange some data between base station and portable part to maintain for example a synchronization to be able to resume communication immediately when a phone call is received or initiated.

For example, in some standards a so-called dummy bearer mode has been defined where so-called dummy bearers are sent during periods without speech data transmission, the dummy bearers comprising for example synchronization information.

In view of the above, it is generally desirable to provide methods and apparatuses which enable a reduction of average output power, in particular transmission power of wireless transmissions, for example during periods where no payload data like speech data is to be transmitted.

In this respect, the present application provides methods and apparatuses as defined in the independent claims. The dependent claims define further embodiments.

Through some of these embodiments, the time a portable part has to be active to be able to receive synchronization information from a fixed part can be reduced, and long inactive periods where power consumption is reduced can be achieved.

Embodiments of the invention are in particular applicable to cordless telephones like DECT telephones, but are not limited to such applications.

Further embodiments will be described with respect to the attached drawings, wherein:

Fig. 1 is a block diagram of a communication system comprising a fixed part and a portable part according to embodiments;

Fig. 2 is a flowchart illustrating a method according to an embodiment;

Fig. 3 is a block diagram showing some elements of an apparatus according to an embodiment;

Fig. 4 is a diagram illustrating an updating of synchronization according to an embodiment;

Fig. 5 shows a magnified portion of the diagram of Fig. 4; and

Fig. 6 is a diagram illustrating an updating of synchronization according to some embodiments.

In the following, embodiments of the present invention will be described in detail. In some embodiments described below, a cordless telephone operating according to a DECT standard as for example ETSI 3000-175-1,...,8 will be used as an example system and apparatus implementing embodiments of the invention. It has to be noted that applications of embodiments are not limited to such systems, and the invention may also be implemented in other systems where data, in particular speech data, is transmitted in data frames, for example in mobile phones which communicate according to a GSM standard or a UMTS standard with a base station.

Some of the following embodiments are switchable between a regular mode and a sleep mode. A regular mode in the context of this application generally refers to a mode of operation where payload data like speech data as well as synchronization information is transmitted. Sleep mode generally refers to a mode of operation where the power consumption is reduced and no payload data is transmitted. However, the sleep mode may, beside sleep periods where the embodiment is a sleep state without data transmission and/or reception, comprise periods referred to as "wake periods" or "wake time" where for example synchronization information may be exchanged between a fixed part and a portable part. In some embodiments, these wake periods during sleep mode are kept short, for example to a duration of only a part of a frame, in order to reduce power consumption, in particular in cases where only a synchronization is updated. Longer wake periods may be used in some embodiments when more data is to be exchanged, for example when a portable part is being paged.

Embodiments discussed in the following refer to frame-based data transmission, in particular TDMA (time division multiple access) frames. In such a system, a frame comprises a plurality of time slots. For example, in DECT transmission systems a DECT frame comprises 24 time slots, which usually are numbered from 0 to 23. Each time slot in such a common DECT frame comprises usually ten frequency cells of which at a given point in time only one is used. Time slots 0-11 usually are used for data transmission from a base station (fixed part) to a portable part, whereas time slots 12-23 are used for data transmission from portable part to fixed part. In DECT frames each time slot usually comprises 480 bits, and a DECT frame typically has a duration of ten milliseconds. A number of, for example 16, of such DECT frames are usually combined to form a multiframe. However, it has to be emphasized that such a DECT system in the following serves only as an example, and as explained above the present application is applicable also to other types of frame-based communication, for example for mobile phones, or also to other standards for cordless telephones than DECT, like PHS frequently used in Asia.

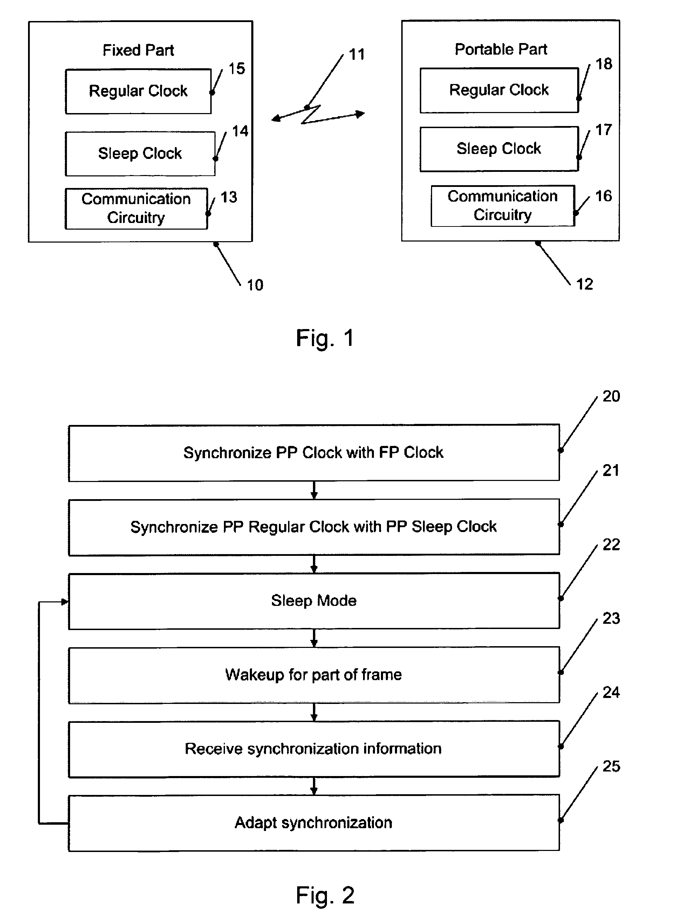

Turning now to the Figures, in Fig. 1 a communication system comprising a fixed part 10 according to an embodiment, for example a base station of a cordless telephone, and a portable part 12 according to an embodiment, for example a portable part of a cordless telephone, is shown. Fixed part 10 and portable part 12 communicate wirelessly as indicated by an arrow 11 with each other using communication circuitry 13 of fixed part 10 and communication circuitry 16 of portable part 12. In the embodiment of Fig. 1, both fixed part 10 and portable part 12 may change between sleep mode and regular mode. In other embodiments, only portable part 12 changes between regular mode and sleep mode, for example to save battery power, which generally tends to be less critical for the fixed part as the fixed usually receives power via a power network.

Portable part 12 comprises a regular clock 18 which is used for clocking in regular mode and a sleep clock 17 which is used for clocking in sleep mode, in particular during periods where no data whatsoever is transmitted. The regular clock 18 may also be used in sleep mode during the above-mentioned wake periods. Regular clock 18 and sleep clock 17 may comprise counters which are clocked by an external or internal clock source, which for example may be based on a quartz crystal oscillator.

In a similar manner, in some embodiments fixed part 10 may comprise a regular clock 15 and a sleep clock 14, the regular clock 15 providing clocking during regular mode (and possibly during wake periods in sleep mode), and sleep clock 14 providing clocking during sleep mode.

In some embodiments, as will be described in the following, the various clocks are synchronized with each other to high accuracy, and during sleep mode only a short wake period is needed for maintaining and adapting synchronization, in particular a wake period comprising only a part of a frame. Likewise, in some embodiments the fixed part may send corresponding synchronization information only during the part of the frame where the portable part is ready to receive it. In other embodiments, the fixed part may continuously send the synchronization information.

The sleep clock 17 usually runs with a considerably lower clock rate than regular clock 18. Likewise, sleep clock 14 in embodiments runs with a considerably lower clock rate than regular clock 15.

In Fig. 2, a method according to an embodiment is illustrated. The method of Fig. 2 may for example be implemented in portable part 12 of Fig. 1 and may be used to implement some of the above-mentioned features. However, the method of Fig. 2 may also be used independently from the embodiment of Fig. 1. Furthermore, while the method is described as sequence of steps or acts to be performed, steps or acts may also be performed in other sequences or orders than the ones shown, and in other embodiments steps or acts may also be added or omitted.

In the embodiment of Fig. 2, it is assumed that the portable part has a regular clock and a sleep clock as illustrated in Fig. 1.

At 20, the regular clock of the portable part is synchronized with the fixed part, in particular a regular clock of the fixed part. In other words, a synchronization between portable part and fixed part is obtained. Such a synchronization of the regular clocks of portable part and fixed part may be obtained in a conventional manner at startup or also in cases where synchronization is lost. As obtaining synchronization between portable part and fixed part is a conventional technique commonly used for example in cordless telephone systems, it will not be further described in detail here.

At 20, additionally the sleep clock of the portable part may be synchronized to the fixed part, in particular the sleep clock of the fixed part, for example by modifying a capacitor array responsible for generating a frequency on which the sleep clock is based until a frame size of the fixed part matches a frame size of the portable part as close as possible or as required, for example a frame size of 10 ms in common DECT systems.

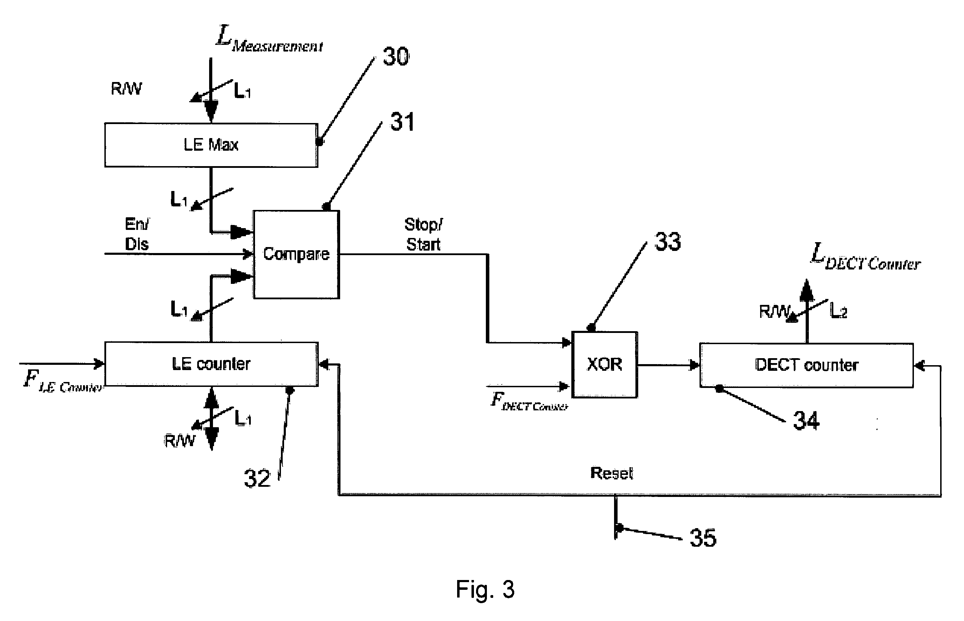

At 21, the regular clock of the portable part, for example regular clock 18 of Fig. 1, is synchronized with a sleep clock of the portable part, for example sleep clock 17 of Fig. 1. Such a synchronization in some embodiments is for example used to be able to determine an appropriate time for a wake period during sleep mode with sufficiently high precision such that synchronization information is received during the wake period. An example for the synchronization between regular clock and sleep clock of the portable part will now be explained with reference to Fig. 3 using a DECT system as an example.

In the example of Fig. 3, a regular clock comprises a DECT counter 34 which is clocked via an Exclusive-OR (XOR) gate 33 by a DECT counter frequency $F_{DECT}$ counter. A sleep clock comprises a counter 32, labeled low energy (LE) counter as it is used in sleep mode, i.e. a low energy mode. LE counter 32 is clocked by a frequency $F_{LE}$ counter .

In the embodiment shown in Fig. 3, $F_{DECT}$ Counter is significantly greater than $F_{LE}$ Counter, i. e. $F_{DECT}$ Counter » $F_{LE}$ Counter · In the embodiment of Fig. 1, the LE counter 32 has a depth of $L_1$ bits, while DECT counter 34 has a depth of $L_2$ bits. Via a reset line 35 LE counter 32 and DECT counter 34 may be reset, e.g. set to zero. In a storage 30 like a register, a maximum value of the LE counter to be used for calibration may be set.

For calibration, a comparator 31 is enabled. At the beginning of the calibration measurement counters 32, 34 are reset to 0. As long as the value counted by LE counter 32 is below a maximum value LE Max stored in storage 30, for example a comparator 31 which receives an output signal from LE counter 32 and storage 30 outputs a signal to Exclusive-OR gate 33 enabling the frequency $F_{DECT}$ counter to control DECT counter 34 for counting, such that during this time DECT counter 34 also counts. As soon as LE counter 32 reaches the value LE Max, via comparator 31 and Exclusive-OR gate 33 the counting of DECT counter 34 is stopped, and the result (end count) $L_{DECT}$ counter may be read out. In this way, the duration of LE Max counts of LE counter 33 may be measured in number of counts of DECT counter 34.

In Fig. 3, R/W indicates that data may be read from or written to counters 32, 34 and storage 30.

The value LE Max in storage 30 may be chosen depending on a required resolution of the calibration. As will be explained later, the resolution of the calibration contributes to determining a drift between the portable part and the fixed part during sleep periods of sleep mode. Another contribution is the resolution of the calibration between the portable part and the fixed part of 20 of Fig. 2. In some embodiments, the resolution of the calibration between the two counters 32, 34 of Fig. 3 is selected such that it is smaller than 10 parts per million, preferably smaller than 1 part per million (ppm).

The LE Counter may have a depth of 24-26 bits. In some embodiments, during the synchronization at 21 the frequency $F_{LE}$ Counter is modified for example using a capacitor array such that a frame size based on the LE Counter is as close as possible to a frame size of the fixed part, for example 10 ms in the case of DECT.

The basic measurement resolution $R_{PPM}$ for a single LE counter interval in ppm can be calculated as:

$$R_{PPM} = 0.5 \times T_{DECT\ Counter} \times 10^6 \times F_{LE\ Counter} \qquad (1)$$

wherein $R_{PPM}$ is the basic measurement resolution for one LE Counter interval in ppm (corresponding to a value of LE Max = 1) and $T_{DECT}$ Counter is the length of the DECT Counter period in seconds, the period length being the inverse of the frequency $F_{DECT}$ Counter. $F_{LE}$ counter in equation (1) is given in HZ .

For a required resolution corresponding to a required maximum drift between the two counters in ppm $M_{MaxPPM}$, a measurement length $L_{Measurement}$ of

$$L_{Measurement} = \left( \frac{R_{PPM}}{M_{MaxPPM}} \right) \qquad (2)$$

is required. By dividing this measurement length $L_{Measurement}$ through the period length of LE counter 32 corresponding to multiplying it with the frequency $F_{LE}$ counter, the value LE Max may be determined. For example, for the typical values of DECT frames given above, a frequency $F_{DECT\ counter}$ of 20.736 MHz which is 18 times the DECT bit rate of 1.152 MHz according to some standards and a frequency of the LE counter $F_{LE}$ counter of 32.768 kHz, a measurement time $L_{Measurement}$ of about 24.1 ms would result to obtain a resolution of 1 ppm. To perform such a measurement, the depth of the DECT counter $L_2$ would have to be at least 19 bits to enable a measurement of 24 ms.

Based on the calibration performed, in some embodiments a scaling factor A is calculated according to

$$A = \left( \frac{N_F \times L_{DECT\ Counter}}{L_{Measurement}} \right) \qquad (3)$$

wherein $N_F$ is a DECT Counter oversampling value to DECT bit length (in the numerical example given above for example 18, where the frequency $F_{DECT\ counter}$ is 18 times the DECT bit rate), and $L_{DECT}$ Counter is the DECT Counter value at the end of the calibration measurement, i.e. the DECT Counter value corresponding to a LE counter value LE Max. This scaling factor will be used later.

Returning now to Fig. 2, at 22, when no payload data is to be transmitted between fixed part and portable part, a sleep mode is entered. During sleep mode, at 23 a wakeup is performed for a part of a frame, during which part at 24 synchronization information is received. During the remaining time of sleep mode, sleep periods are arranged between wake periods where no signal reception occurs at the portable part and power consumption is reduced.

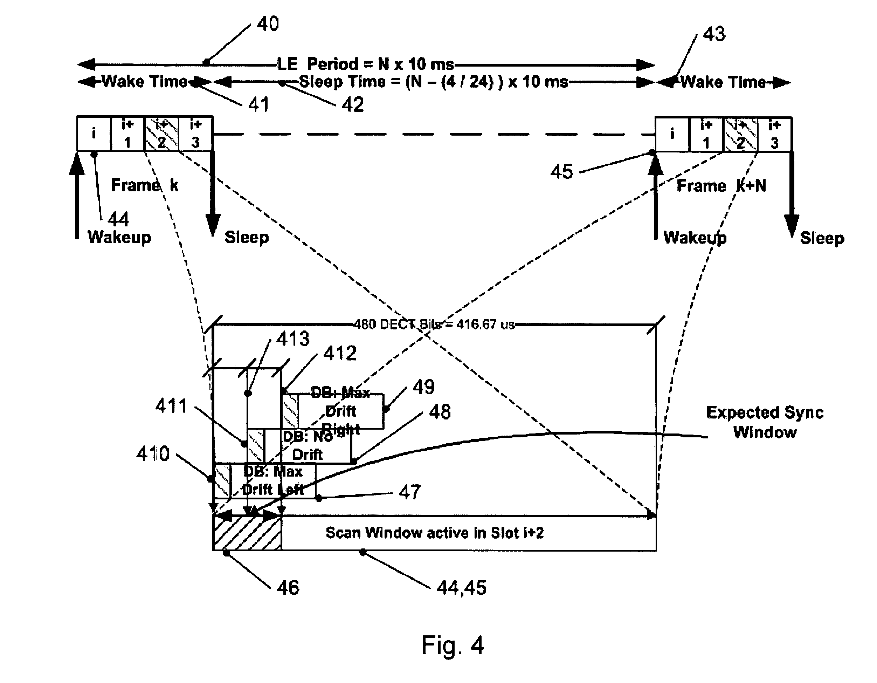

At 25, based on the received synchronization information the synchronization is adapted or adjusted. This sleep mode may be maintained until payload data has to be transmitted again. An example for such a sleep mode with wake periods and sleep periods will now be given using again a DECT system as example with reference to Figs. 4-6.

In Fig. 4, two wake periods 41, 43 are shown separated by a sleep period 42. One wake period and one sleep period together form a LE (low energy) period 40.

The length of a LE period 40 is N DECT frames, i.e. in case of conventional DECT N x 10 ms. The ratio of wake time (length of wake period) to sleep time (length of sleep period) is determined by the drift between the sleep clock in the portable part and the sleep clock of the fixed part, as this drift determines how far the synchronization can drift during sleep period and the wakeup period or the width of a scan window during the wakeup period which will be described below determines the maximum drift which can be detected. In other words, the longer the sleep period is, the longer also the scan window, labeled 46 in Fig. 4, should be to be able to securely catch an accumulated drift which accumulated during the sleep period 42.

In the example shown in Fig. 4, the wakeup period has a duration of four time slots 44, 45, 44 designating time slots of a frame k before sleep period 42 and 45 designating time slots of a frame k+N after sleep period 42, i.e. corresponding to wake period 43.

In the example shown, a scan for a synchronization signal, for example a dummy bearer in case of DECT, is performed during time slot i+2 during each wake time. Time slots i and i+1 may for example be used to prepare for the scan, for example reloading registers, counters etc. with values estimated prior to the sleep period preceding the wake period. In particular, such estimated values may be calculated prior to each sleep period and stored and then reloaded during time slots i, i+1.

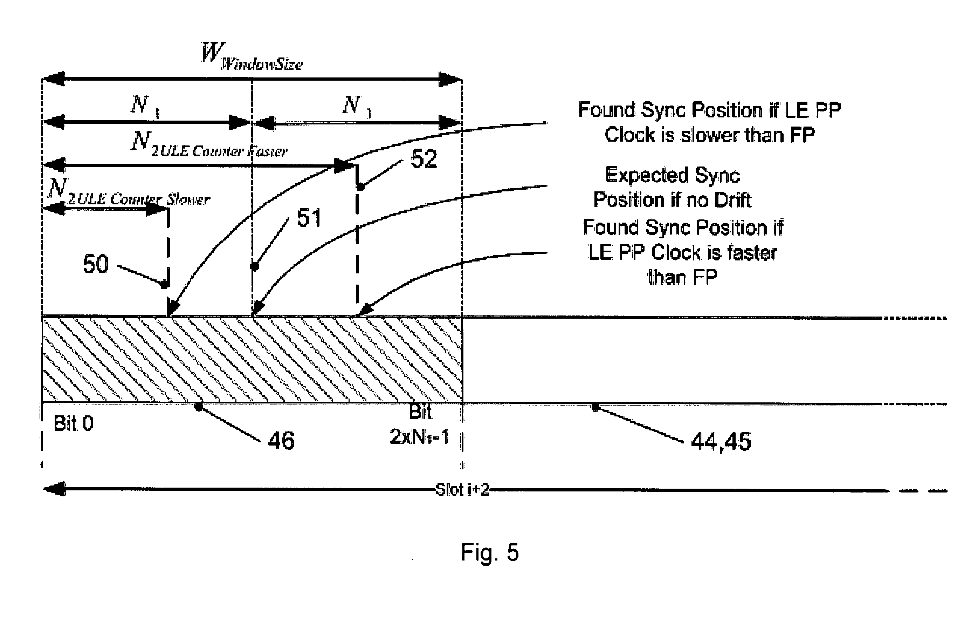

Time slots 44, 45 i+2 as shown in the lower half of Fig. 4 comprise a scan window 46 during which, according to the drift/calibration measurements performed initially, synchronization information, for example in form of a dummy bearer or part thereof, is expected. Fig. 5 shows a magnified portion of Fig. 4. In Fig. 4, 413 marks a middle of the synchronization window 46. If no drift occurs, synchronization information 411 of a dummy bearer 48 arrives at this middle position 413 corresponding to an expected position 51 in Fig. 5. With a maximum drift to the left (based on the calibration measurement and possibly other system knowledge), a dummy bearer 47 with synchronization information 410 arrives at the start of synchronization window 46. With maximum drift to the right, a dummy bearer 49 with synchronization information 412 arrives at the end of synchronization window 46. In other words, as can be seen in Fig. 5 when the sleep clock of the portable part is slower than the sleep clock of the fixed part, the arrival of a synchronization information is shifted to the left in Fig. 5, i.e. to earlier times, as indicated by a position 50, and if the sleep clock of the portable part is faster than the one of the fixed part, the synchronization arrives shifted to the right, i.e. at a later time, as indicated by a position 52 in Fig. 5. $W_{WindowSize}$ indicates a width of the scan window. It should be noted that in case the scan window is within a single time slot, the maximum size in DECT system is 480 DECT bits, i.e. about $\pm$ 200 DECT bits, this being merely an example for a DECT system.

In Fig. 4, it is assumed that the wakeup is in bit 0 of slot i and the start of the next sleep period is in bit 0 of slot (i+j) mod 24, in the present case of slot i+4 (i.e. at the end of slot i+3). j is the number of time slots in the wake period. The LE period is then N x 10 ms as explained, and the length of the sleep period is (N-(j/24) x 10 ms for DECT systems, as a DECT frame comprises 24 time slots as explained previously.

As mentioned, the duration of the LE period depends on the synchronization window size, i.e. $W_{windowSize}$, and the drift between the sleep clocks of the portable part and the fixed part. The dependency can be written as

$$T_{Max\ LE\ Period} = \left( \frac{W_{Max\ Window\ Size}}{2 \times D_{Max\ Drift}} \right) \qquad (4)$$

wherein $T_{Max\ LE}$ period is the maximum LE period in seconds, $W_{Max\ window\ Size}$ is the maximum synchronization window size in microseconds (in case of DECT, in the example above the maximum size would correspond to the duration of one time slot, which is 416,67 μs long in common DECT systems), and $D_{Max\ Drift}$ is the maximum drift between the sleep clocks in portable part and fixed part in parts per million given in microseconds/seconds. This maximum drift can be obtained by measurements and to some extent also can be based on experience with the respective system used.

To give an example, if the maximum drift $D_{MaX\ Drift}$ is 2 ppm and the maximum LE period is 1 s a synchronization window of about 5 DECT bits corresponding to 4 ms would be needed.

In the embodiments shown, during the sleep period only the sleep clock is active, and the length of the sleep period is determined by the sleep clock, for example the LE counter of Fig. 3. In some embodiments, the length of the sleep period in LE counter increments $N_{LE\ counter}$ may be calculated according to

$$N_{LE\ Counter} = \left\lfloor \frac{C}{A} \right\rfloor \qquad (5)$$

wherein C is the length of the sleep interval in DECT bits and A is the scaling factor of equation (3). $\lfloor\ \rfloor$ correspond to a rounding down operation, i.e. it yields the next smallest integer value of its argument. To compensate for this rounding, in some embodiments after wakeup extra bits are introduced. A correction value S giving this number of extra DECT bits can be calculated according to

$$S = \left\| C - A \times N_{LE\ Counter} \right\| \qquad (6)$$

$\|\ \|$ orresponds to a roundup operation, i.e. yields the next largest integer.

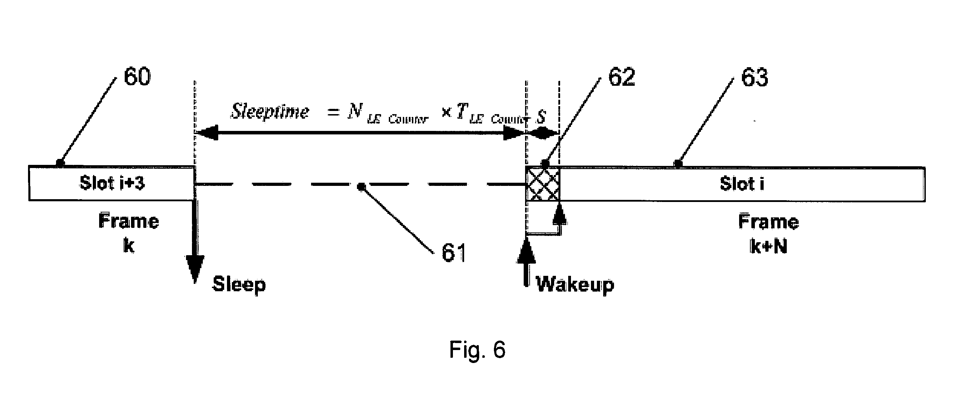

As shown in Fig. 6, such S bits can be introduced as indicated by reference numeral 62 after a sleep period 61 prior to the first time slot 63 of the wake period. 60 denotes the last time slot prior to sleep period 61.

The insertion of these correction bits may for example be performed by incrementing a slot bit counter by S bits on wakeup.

The maximum value of the correction value S corresponds to the time period of the LE counter, i.e. the inverse of $F_{LE}$, and in the above numerical example corresponds to about 30.5 ms corresponding to 35 DECT bits.

In an example where the sleep period is 15 frames using the numerical examples above $N_{LE\ counter}$ may be about 4913, and S may be equal to 10.

As already mentioned, at 25 in Fig. 2 the synchronization is adapted. In particular, for example based on the value $N_2$ in Fig. 5, or the difference between $N_1$ and $N_2$, the synchronization may be adapted. In some embodiments, the sleep clock may be modified by modifying the frequency $F_{LE\ Clock}$, for example by modifying a capacitor array of an LC oscillator. In other embodiments, where such a physical change of the sleep clock is not possible, a correction may be performed by adapting the number of bits to be inserted, for example the value S in Fig. 6, after each wake period. This may be performed by an algorithm according to the following equations.

$$\Delta_{Drift}(n) = \left( \frac{N_1 - N_2}{N_{LE\ Counter}(n)} \right) \qquad (7)$$

$$A(n+1) = A(n) + \Delta_{Drift}(n) \qquad\qquad (8)$$

$$N_{LE\ Counter}(n+1) = \left\lfloor \frac{C}{A(n+1)} \right\rfloor \qquad\qquad (9)$$

$$S(n+1) = \left\| C - A(n+1) \times N_{LE\ Counter}(n+1) \right\| \qquad\qquad (10)$$

Here, n is an index which is incremented with each wakeup period. In other words, based on the values $N_1$ and $N_2$, the values for A, $N_{LE\ Counter}$ and S are updated using a value $\Delta_{Drift}$ which corresponds to a drift correction in number of DECT bits per LE Counter increment starting from the previous values. In this way, the synchronization may be continuously updated.

It should be noted that in some embodiments for calculation of the first sleep period length $N_1$ is subtracted from C as it can be assumed that the portable part is in synchronization to the fixed part and in order to tune the system to locate the synchronization information in the middle of the synchronization window for the case of zero drift.

It should be noted while above mainly the case of the portable part receiving the synchronization information has been discussed, the same principles can also be used in the reverse communication direction. Furthermore, the fixed part can be adapted to use essentially the same method as depicted in Fig. 2 for transmitting the synchronization information instead of receiving it, i.e. also the transmitting of synchronization information may be adapted in some embodiments.

Also, while in some of the above-described embodiments a wake period with a wake time comprising only a few (e.g. four) timeslots of a frame is used, longer wake times may also be employed. For example, if more data, e.g. payload data, than just synchronization information is to be exchanged between portable part and fixed part, e.g. when the portable part is paged, the wake time may have a duration corresponding to one or several frames.

It is furthermore to be noted that features from different embodiments can be combined unless specifically noted otherwise. On the other hand, describing an embodiment with a plurality of features is not to be construed as indicating that all those features are necessary for practicing the invention, as other embodiments may comprise less features or alternative features. A DECT system has been used above merely as an example system for better illustrating features of some embodiments and is not to be construed as limiting.

**Claims**

1.   A method, comprising:

    providing a communication apparatus (12) for frame-based data transmission,
    setting the communication apparatus (12) in a sleep state without data transmission,
    waking up the communication apparatus (12) after a predetermined sleep time for a wake time,
    receiving synchronization information during said wake time, and
    updating a synchronization between the communication apparatus (12) and a further communication apparatus (10) which sent the synchronization information based on the received synchronization information.

2.   The method of claim 1,
    wherein said wake time has a duration corresponding to the duration of only a part of a frame.

3.   The method of claim 2, wherein said frame-based data communication uses time division multiplex frames comprising a plurality of time slots,
    wherein said waking up for only a part of a frame has a duration of a plurality of time slots, wherein said synchronization information is received in only one of said plurality of time slots.

4.   The method of claim 3, wherein said synchronization information is received only in a part of said one of said plurality of time slots.

5. The method of any one of claims 1 to 4, wherein said communication apparatus (10) comprises a regular clock (18; 34) operable during data transmission and a sleep clock (17; 32) configured to measure said predetermined time, the method further comprising synchronizing said sleep clock (17; 32) with said regular clock (18; 34).

6. The method of claim 5, wherein said synchronizing comprises counting a number of periods of said regular clock (18; 34) during a predetermined number of periods of said sleep clock (17; 32).

7. The method of claim 5 or 6, further comprising calculating a length of said sleep state in clock units of said sleep clock depending on a length of said sleep state in units of said regular clock and said calibration.

8. The method of any one of claims 5 to 7, further comprising determining a correction value based on said calibration, and

inserting a delay (62) at said waking up based on said correction value.

9. The method of claim 8, wherein updating said synchronization comprises updating said delay based on said synchronization information.

10. The method of any one of claims 1 to 9, wherein said updating said synchronization based on said received synchronization information comprises updating said synchronization based on a point in time during said wake time when said synchronization information is received.

11. The method of any one of claims 1 to 10, further comprising calculating a duration of said sleep state depending on an expected drift between the communication apparatus and the further communication apparatus from which the synchronization information is received.

12. The method of any one of claims 1 to 11, further comprising determining a duration of said sleep state and a duration during which said synchronization information is receivable at said communication apparatus mutually dependent from each other.

13. A device, comprising:

communication circuitry for frame-based data communication, wherein said communication circuitry is configured to be set in a sleep state without data communication and to be woken up after a predetermined sleep time for a wake time, to receive synchronization information during wake time and to update a synchronization with a further communication apparatus from which the synchronization information was sent based on the received synchronization information.

14. The device of claim 13, further comprising a sleep counter (33) configured to measure said sleep time and a regular counter (34), said regular counter receiving a clock frequency ($F_{DECT\ counter}$) governing said frame-based data transmission.

15. The device of any one of claims 13 to 14, wherein the apparatus is configured to perform the method of any one of claims 1 to 12.

Fixed Part

Regular Clock — 15

Sleep Clock — 14

Communication Circuitry — 13

— 11

— 10

Portable Part

Regular Clock — 18

Sleep Clock — 17

Communication Circuitry — 16

— 12

## Fig. 1

Synchronize PP Clock with FP Clock — 20

Synchronize PP Regular Clock with PP Sleep Clock — 21

Sleep Mode — 22

Wakeup for part of frame — 23

Receive synchronization information — 24

Adapt synchronization — 25

## Fig. 2

Fig. 3

Fig. 4

Fig. 5

Fig. 6

**EP 2 587 698 A1**

<table>
<tr><td colspan="4" align="center">Europäisches Patentamt<br>European Patent Office<br>Office européen des brevets</td><td colspan="2" align="center">**EUROPEAN SEARCH REPORT**</td><td>**Application Number**<br>EP 11 00 8674</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 393 007 B1 (HAARTSEN JACOBUS C [NL]) 21 May 2002 (2002-05-21)<br>* abstract *<br>* page 1, line 58 - line 67 *<br>* page 5, line 15 - line 30 *<br>* page 6, line 34 - page 8, line 47 *<br>* page 10, line 62 - page 12, line 7 *<br>----- | 1-15 | INV.<br>H04J3/16<br>H04M1/73 |
| X | EP 0 930 794 A1 (ERICSSON TELEFON AB L M [SE]) 21 July 1999 (1999-07-21)<br>* abstract *<br>* paragraph [0001] - paragraph [0003] *<br>* paragraph [0016] - paragraph [0019] *<br>* paragraph [0025] - paragraph [0046] *<br>----- | 1-15 | |
| A | GB 2 477 420 A (LANTIQ DEUTSCHLAND GMBH [DE]) 3 August 2011 (2011-08-03)<br>* the whole document *<br>----- | 1-15 | |
| | | | TECHNICAL FIELDS SEARCHED (IPC)<br>H04J<br>H04M<br>H04W |

The present search report has been drawn up for all claims

| Place of search | Date of completion of the search | Examiner |
|---|---|---|
| Munich | 10 April 2012 | Chauvet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 11 00 8674

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2012

| Patent document cited in search report | | Publication date | Patent family member(s) | | Publication date |
|---|---|---|---|---|---|
| US 6393007 | B1 | 21-05-2002 | NONE | | |
| EP 0930794 | A1 | 21-07-1999 | DE | 69722228 D1 | 26-06-2003 |
| | | | DE | 69722228 T2 | 27-11-2003 |
| | | | EP | 0930794 A1 | 21-07-1999 |
| GB 2477420 | A | 03-08-2011 | CN | 102143573 A | 03-08-2011 |
| | | | DE | 102010001358 A1 | 04-08-2011 |
| | | | FR | 2955994 A1 | 05-08-2011 |
| | | | GB | 2477420 A | 03-08-2011 |
| | | | US | 2011188490 A1 | 04-08-2011 |

EPO FORM P0459

For more details about this annex : see Official Journal of the European Patent Office, No. 12/82